# EUROPÄISCHE PATENTSCHRIFT

(11) **EP 4 538 591 B1**
(45) Veröffentlichungstag und Bekanntmachung des Hinweises auf die Patenterteilung: **28.01.2026**
(21) Anmeldenummer: 24204883.3
(22) Anmeldetag: 07.10.2024
(51) Int. Cl.: F21S 43/19, F21S 43/237

(54) **BELEUCHTUNGSVORRICHTUNG MIT LICHTLEITERN FÜR FAHRZEUGE**
LIGHTING DEVICE WITH LIGHT GUIDES FOR VEHICLES
DISPOSITIF D'ÉCLAIRAGE AVEC GUIDES DE LUMIERE POUR VÉHICULE

(30) Priorität: 09.10.2023 DE 102023127403; 27.10.2023 DE 102023129741
(43) Veröffentlichungstag der Anmeldung: 16.04.2025
(73) Patentinhaber: HELLA GmbH & Co. KGaA, 59552 Lippstadt (DE)
(72) Erfinder: HOHMANN, Carsten, 59581 Warstein (DE); HUNECKE, Katrin, 59588 Lippstadt (DE); LEIER, Yves Alexander, 59557 Lippstadt (DE); SCHÖNE, Michael, 59555 Lippstadt (DE); Sieding, Sophia, Dortmund (DE)
(74) Vertreter: Behr-Wenning, Gregor

(56) Entgegenhaltungen:
- EP-A1- 4 166 843
- EP-A2- 2 048 430
- EP-B1- 2 354 637
- CN-A- 110 208 894
- DE-U1- 202011 051 503
- FR-A1- 2 995 975
- KR-A- 20210 043 071

## Beschreibung

Die Erfindung betrifft eine Beleuchtungsvorrichtung für Fahrzeuge nach dem Oberbegriff des Patentanspruchs 1.

Aus der EP 2 354 637 A2 ist eine Beleuchtungsvorrichtung für Fahrzeuge bekannt, die eine erste Lichteinheit und eine zweite Lichteinheit enthaltend jeweils eine Lichtquelle und einen flächigen Lichtleiter aufweist. Die flächigen Lichtleiter der ersten Lichteinheit und der zweiten Lichteinheit sind einstückig miteinander verbunden und kreuzen sich in einem Kreuzungsbereich. Die erste Lichteinheit und die zweite Lichteinheit weisen jeweils flächige Lichtleiter auf, die an der einen Schmalseite eine Lichteinkoppelfläche aufweisen, an denen das Licht eingekoppelt wird und über gegenüberliegende Flachseiten der jeweiligen flächigen Lichtleiter weitergeleitet wird. Während der erste flächige Lichtleiter von dem Kreuzungsbereich ausgehend einen Umlenkungsabschnitt und einen ersten ebenen Abschnitt aufweist, ist der zweite flächige Lichtleiter eben ausgebildet und erstreckt sich in einer Ebene. Auf diese Weise kann auf einer der Lichteinkoppelfläche gegenüberliegenden Seite des zweiten flächigen Lichtleiters eine linienförmige Lichtauskopplung zur Erzeugung einer Lichtfunktion erfolgen. Der zweite Lichtleiter weist Auskoppelmittel auf, so dass an einer vorderen Flachseite desselben Licht ausgekoppelt wird zur Erzeugung einer Lichtfunktion. Vorteilhaft kann hierdurch eine linienförmige Lichtfunktion und eine flächenhafte Lichtfunktion unmittelbar nebeneinander angeordnet werden. Wünschenswert ist es, erweiterte Lichtfunktionen platzsparend anzuordnen.

Aus der EP 4 166 843 A1 ist eine Beleuchtungsvorrichtung für Fahrzeuge mit einer ersten Lichteinheit und einer zweiten Lichteinheit bekannt, wobei sowohl die erste Lichteinheit als auch die zweite Lichteinheit jeweils eine Lichtquelle und einen flächigen Lichtleiter aufweisen. Die beiden flächigen Lichtleiter weisen einen Kreuzungsbereich auf, an dem sich gegenüberliegende Flachseiten des einen Lichtleiters und gegenüberliegende Flachseiten des anderen Lichtleiters kreuzen. An dem Kreuzungsbereich wird der erste flächige Lichtleiter und der zweite flächige Lichtleiter als Verlängerungsabschnitt fortgeführt und das Licht dann an den Verlängerungsabschnitten ausgekoppelt.

Aufgabe der vorliegenden Erfindung ist es daher, eine Beleuchtungsvorrichtung für Fahrzeuge mit zwei sich kreuzenden flächigen Lichtleitern derart weiterzubilden, dass platzsparend mehrere Lichtfunktionen bereitgestellt werden können.

Zur Lösung dieser Aufgabe weist die Erfindung die Merkmale des Patentanspruchs 1 auf.

Der besondere Vorteil der Erfindung besteht darin, dass platzsparend eine Mehrzahl von Lichtfunktionen erzeugt werden können. In Vorderansicht auf die Beleuchtungsvorrichtung ergibt sich lediglich eine Lichtabstrahlfläche, die aus einem durch eine erste Lichteinheit erzeugten flächigen Lichtbündel einerseits und einem von der zweiten Lichteinheit erzeugten linienförmigen Lichtbündel andererseits besteht. Die Lichtabstrahlfläche des austretenden flächigen Lichtbündels wird begrenzt durch einen Umlenkungsabschnitt der ersten Lichteinheit und dem Kreuzungsbereich, von dem der zweite flächige Lichtleiter in Hauptabstrahlrichtung abragt. Dadurch, dass ein U-förmiges Lichtleitelement vorgesehen ist, kann eine Breite der flächigen Lichtauskopplung zwischen dem Kreuzungsbereich und dem Umlenkungsbereich definiert werden. Die Abstrahlung des linienförmigen Lichtbündels durch die erste Lichteinheit erfolgt in Lichtführungsrichtung innerhalb des flächigen Lichtleiters, so dass durch Ausbildung von Auskoppelmitteln der ersten Lichteinheit ein definierter Lichtstrom für die flächige und linienförmige Lichtabstrahlung der ersten Lichteinheit einfach einstellbar ist.

Nach der Erfindung weist das U-förmige Lichtleitelement einen relativ großflächigen Scheitel auf, der durch den zweiten Abschnitt des ersten Lichtleiters gebildet ist. Ein erster Schenkel wird durch einen ersten Abschnitt des ersten Lichtleiters und ein zweiter Schenkel durch einen ersten Abschnitt des zweiten Lichtleiters gebildet. Vorteilhaft kann die Lichtabstrahlfläche platzsparend erzeugt werden, wobei der erste Schenkel und der zweite Schenkel annähernd parallel oder in einem spitzen Öffnungswinkel in einer Auszugsrichtung eines Spritzgießwerkzeugs verlaufen können.

Nach der Erfindung sind auf einer dem Kreuzungsbereich abgewandten Seite der Verlängerungsabschnitte des ersten Lichtleiters und des zweiten Lichtleiters Schmalseiten als Lichtauskoppelflächen ausgebildet. Vorteilhaft können hierdurch zwei unterschiedliche linienförmige Lichtfunktionen, die vorzugsweise im rechten Winkel abgestrahlt werden, erzeugt werden. Der Verlängerungsabschnitt des ersten Lichtleiters kann insbesondere zur Erzeugung eines Seitenmarkierungslichtes dienen, das senkrecht zu der in Richtung der Fahrzeuglängsachse verlaufenden Richtung des aus dem zweiten Abschnitt des ersten Lichtleiters austretenden Lichtbündels verläuft.

Nach der Erfindung erfolgt die linienförmige Lichtauskopplung an den Verlängerungsabschnitten des ersten Lichtleiters und des zweiten Lichtleiters jeweils in Richtung einer Lichtführungsrichtung des ersten Lichtleiters bzw. des zweiten Lichtleiters. Vorteilhaft ist hierdurch die Lichtausbeute relativ groß.

Nach einer Weiterbildung der Erfindung verläuft eine Erstreckungsachse des Kreuzungsbereiches parallel zu einer Erstreckung der linienförmigen Lichtauskopplungen an den Verlängerungsabschnitten des ersten Lichtleiters und des zweiten Lichtleiters. Die Erstreckungsachse des Kreuzungsbereiches sowie die Erstreckung der Lichteinkoppelflächen verläuft in vertikaler Richtung.

Nach der Erfindung weist zumindest der zweite Abschnitt des ersten Lichtleiters Auskoppelmittel auf, so dass an einer vorderen Flachseite des zweiten Abschnitts Licht ausgekoppelt wird zur Erzeugung einer vorgegebenen Lichtverteilung. Gegebenenfalls können weitere zweite Auskoppelmittel vorgesehen sein, so dass zusätzlich oder alternativ das eingekoppelte Licht entsprechend einer vorgegebenen Beschriftung oder zur Erzeugung eines Logos an den zweiten Abschnitt des ersten Lichtleiters erzeugt wird. Die Ausleuchtfläche kann somit zu Informationszwecken genutzt werden. Nach einer Weiterbildung der Erfindung ist in dem Umlenkabschnitt des ersten Lichtleiters eine Schrägfläche vorgesehen, mittels derer das eingekoppelte Licht um 90° umgelenkt wird. Die Schrägfläche ist vorzugsweise eben und in einem Winkel von zwischen 40° und 50°, vorzugsweise 45°, zu einer Erstreckungsrichtung des ersten und zweiten Abschnittes des ersten Lichtleiters angeordnet. Vorzugsweise weist die Schrägfläche Reflexionsoptikelemente oder eine verspiegelte Fläche auf.

Nach einer Weiterbildung der Erfindung verlaufen an einer lichteinkoppelseitigen Schmalseite des ersten Abschnitts des ersten Lichtleiters und des zweiten Lichtleiters Haltearme zur Befestigung des U-förmigen Lichtleitelementes an einem Gehäuse der Beleuchtungsvorrichtung. Auf diese Weise kann ein relativ großflächiges U-förmiges Lichtleitelement stabil gehalten werden.

Weitere Vorteile der Erfindung ergeben sich aus den weiteren Unteransprüchen.

Ein Ausführungsbeispiele der Erfindung wird nachfolgend anhand der Zeichnungen näher erläutert.

Es zeigen:

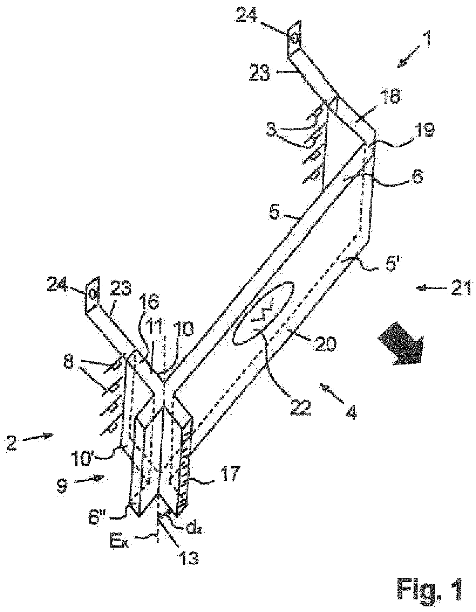

- Fig. 1: eine perspektivische Darstellung einer erfindungsgemäßen Beleuchtungsvorrichtung und

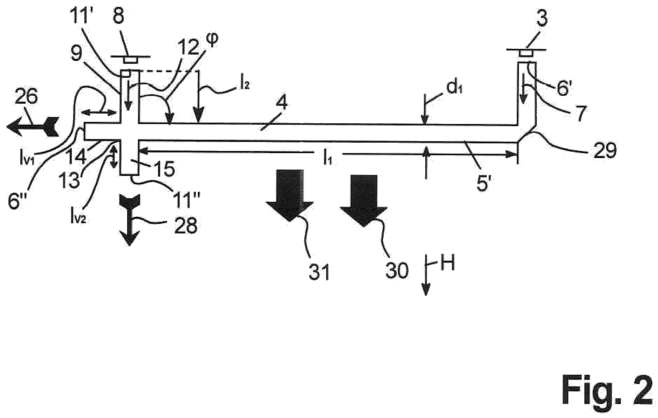

- Fig. 2: einen Horizontalschnitt durch die Beleuchtungsvorrichtung.

Eine erfindungsgemäße Beleuchtungsvorrichtung für Fahrzeuge kann beispielsweise im Heckbereich zur Erzeugung einer Schlusslichtfunktion, Umrisslichtfunktion und einer Seitenmarkierungslichtfunktion dienen.

Die erfindungsgemäße Beleuchtungsvorrichtung weist eine erste Lichteinheit 1 und eine zweite Lichteinheit 2 auf, die unabhängig voneinander eine vorgegebene Lichtverteilung erzeugen.

Die erste Lichteinheit 1 umfasst eine Anzahl von Lichtquellen 3 und einen ersten flächigen Lichtleiter 4, der über zwei gegenüberliegende Flachseiten 5, 5' verfügt. Die gegenüberliegenden Flachseiten 5, 5' sind über eine Schmalseite 6 miteinander verbunden. An einem ersten Ende des ersten Lichtleiters 4 ist eine Schmalseite 6 als eine linienförmige Lichteinkoppelfläche ausgebildet. Entlang der Lichteinkoppelfläche 6' sind mehrere Lichtquellen 3 angeordnet, so dass ein erstes Licht 7 an der Lichteinkoppelfläche 6' eingekoppelt und entlang der gegenüberliegenden Flachseiten 5, 5' durch Totalreflexion weitergeleitet wird in Richtung einer linienförmigen Lichtauskoppelfläche 6" des ersten Lichtleiters 4. Die linienförmige Lichteinkoppelfläche 6' kann geradlinig oder bogenförmig verlaufen, wobei die Lichtquellen 3 konturfolgend zu der Lichteinkoppelfläche 6 angeordnet sind.

Die zweite Lichteinheit 2 umfasst Lichtquellen 8 und einen zweiten Lichtleiter 9, der über gegenüberliegende Flachseiten 10, 10' sowie dieselben verbindende Schmalseiten 11 aufweist. Eine Schmalseite 11' des zweiten Lichtleiters 9 ist als eine linienförmige Lichteinkoppelfläche ausgebildet, entlang derer mehrere Lichtquellen 8 reihenförmig bzw. langgestreckt angeordnet sind. Das von den Lichtquellen 8 abgestrahlte zweite Licht 12 wird durch die Lichteinkoppelfläche 11' in den zweiten Lichtleiter 9 eingekoppelt und an den gegenüberliegenden Flachseiten 10, 10' desselben totalreflektiert in Richtung einer weiteren Schmalseite 11, die als linienförmige Lichtauskoppelfläche 11" ausgebildet ist. An der linienförmigen Lichtauskoppelfläche 11" wird das zweite Licht 12 ausgekoppelt.

Der erste Lichtleiter 4 und der zweite Lichtleiter 9 sind einstückig ausgebildet und insbesondere als Spritzgießteil hergestellt. In einem Kreuzungsbereich 13 kreuzen sich die parallelen Flachseiten 5, 5' des ersten Lichtleiters 4 mit den Flachseiten 10, 10' des zweiten Lichtleiters 9. Da der Kreuzungsbereich 13 in einem Bereich des ersten Lichtleiters 4 und des zweiten Lichtleiters 9 angeordnet ist, an dem sich lichtstromabwärts lediglich ein vergleichsweise kurzer Verlängerungsabschnitt 14 des ersten Lichtleiters 4 und ein Verlängerungsabschnitt 15 des zweiten Lichtleiters 9 anschließt, ist der Anteil des Lichtes 7, 12, der durch Streuung in dem kreuzenden anderen Lichtleiter 9 bzw. 4 verloren geht, relativ gering. Insbesondere bezüglich des ersten Lichtleiters 4 weist der Verlängerungsabschnitt 14 eine wesentlich kleinere Länge I_{V1} auf als eine Länge I₁ eines zweiten Abschnitts 20 des ersten Lichtleiters 4, der sich lichtstromaufwärts des Kreuzungsbereichs 13 befindet. Die Länge I_{V1} des Verlängerungsabschnitts 14 ist kleiner als 50 %, vorzugsweise kleiner 30 %, insbesondere kleiner als 10 % der Länge I₁ des zweiten Abschnitts 20 des ersten Lichtleiters 4.

Eine Länge I_{V2} des Verlängerungsabschnitts 15 des zweiten Lichtleiters 9 ist kleiner als eine Länge I₂ des lichtstromaufwärts des Kreuzungsbereichs 13 verlaufenden ersten Abschnitt 16 des zweiten Lichtleiters 9.

Eine Gesamtlänge des zweiten Lichtleiters 9 ist die Summe aus der Länge I2 des ersten Abschnitts 16, der Länge I_{V2} des Verlängerungsabschnitts 15 und der Dicke d1 des ersten Lichtleiters 4. Sowohl der Verlängerungsabschnitt 15 als auch der erste Abschnitt 16 des zweiten Lichtleiters 9 sind bezogen auf den durch den Kreuzungsbereich 13 (Kreuzungspunkt) hindurchgehenden zweiten Abschnitt 20 des ersten Lichtleiters 4 in einem Winkel von 85° bis 95° angeordnet, vorzugsweise nicht in einem rechten Winkel, damit ein Auszug aus einem Spritzgießwerkzeug ermöglicht wird. Die gegenüber zu der linienförmigen Lichteinkoppelfläche 11' angeordnete linienförmige Lichtauskoppelfläche 11" kann Streuoptikelemente 17 aufweisen zur streuenden Lichtauskopplung entsprechend einer vorgegebenen Lichtverteilung.

Ein lichtstromaufwärts zum Kreuzungsbereich 13 angeordneter Bereich des ersten Lichtleiters 4 weist einen ersten ebenen Abschnitt 18 auf, der die Lichteinkoppelfläche 6' aufweist. In Lichtstromrichtung schließt sich an den ersten Abschnitt 18 ein Umlenkabschnitt 19 an, an dem das eingekoppelte erste Licht 7 um etwa 90° umgelenkt wird in Richtung des zweiten Abschnitts 20, der eben ausgebildet ist und sich bis zu dem Kreuzungsbereich 13 erstreckt. Der Umlenkungsabschnitt 19 weist eine Schrägfläche 29 auf, an der das Licht 7 umgelenkt wird. Die Schrägfläche 29 kann Reflexionsoptikelemente oder eine verspiegelte Fläche aufweisen.

Der erste Abschnitt 18, der Umlenkabschnitt 19 und der zweite Abschnitt 20 des ersten Lichtleiters 4 bildet zusammen mit dem ersten Abschnitt 16 des zweiten Lichtleiters 9 ein in einer quer zu der linienförmigen Lichteinkoppelfläche 6', 11' des ersten Lichtleiters 4 und des zweiten Lichtleiters 9 verlaufenden Ebene ausgebildetes U-förmiges Lichtleitelement 21. Der Kreuzungsbereich 13 befindet sich in einem lichtauskoppelnahen Bereich des ersten Lichtleiters 4 und des zweiten Lichtleiters 9. Der zweite Abschnitt 20 des ersten Lichtleiters 4 bildet einen Scheitel des U-förmigen Lichtleitelementes. Der erste Abschnitt 18 und der Umlenkabschnitt 19 des ersten Lichtleiters 4 bilden einen ersten Schenkel des U-förmigen Lichtleitelementes 21. Der erste Abschnitt 16 des zweiten Lichtleiters 9 bildet einen zweiten Schenkel des U-förmigen Lichtleitelementes 21.

In dem Kreuzungsbereich 13 verlaufen die Flachseiten 5, 5' des ersten Lichtleiters 4 bzw. Flachseiten 10, 10' des zweiten Lichtleiters 9 in gleicher Richtung weiter, wobei die Flachseiten 5, 5' bzw. 10, 10' des ersten Lichtleiters 4 bzw. des zweiten Lichtleiters 9 wechselweise unterbrochen sind.

Vorzugsweise weist der erste Lichtleiter 4 und der zweite Lichtleiter 9 eine konstante Dicke d₁ bzw. d₂ auf, so dass die Unterbrechungsweite der jeweiligen Flachseiten 5, 5' des ersten Lichtleiters 4 bzw. Flachseiten 10, 10' des zweiten Lichtleiters 9 in dem Kreuzungsbereich 13 gleich groß sind.

Die Flachseiten 5, 5' des ersten Lichtleiters 4 und die Flachseiten 10, 10' des zweiten Lichtleiters 9 verlaufen in Lichtstromrichtung auf den Kreuzungsbereich 13 jeweils geradlinig zu, wobei sie im Kreuzungsbereich 13 einen Winkel φ einschließen. Da die Flachseiten 5, 5' und 10, 10' des ersten Lichtleiters 4 bzw. des zweiten Lichtleiters 9 jeweils geradlinig verlaufen, schließen auch die Verlängerungsabschnitte 14 des ersten Lichtleiters 4 und Verlängerungsabschnitte 15 des zweiten Lichtleiters 9 den gleichen Winkel φ zueinander ein. Da im vorliegenden Ausführungsbeispiel die Flachseiten 5, 5' bzw. 10, 10' des ersten Lichtleiters 4 und des zweiten Lichtleiters 9 nicht exakt senkrecht aufeinander zulaufen, beträgt der Öffnungswinkel φ nicht 90°, sondern hat eine Abweichung von 90° von +/- 5°.

Eine Erstreckungsachse E_{K} des Kreuzungsbereichs 13 verläuft parallel zu einer Erstreckungsrichtung der Lichteinkoppelflächen 6', 11' des ersten und zweiten Lichtleiters 4, 9 bzw. parallel zu der Lichtauskoppelfläche 6", 11" der Verlängerungsabschnitte 14, 15.

Zwischen dem Umlenkabschnitt 19 und dem Kreuzungsbereich 13, in dem sich der zweite Abschnitt 20 des ersten Lichtleiters 4 befindet, sind nicht dargestellte Auskoppelmittel derart angeordnet, dass das in dem ersten Lichtleiter 4 eingekoppelte Licht an einer vorderen Flachseite 5' desselben in Hauptabstrahlrichtung H der Beleuchtungsvorrichtung ausgekoppelt wird. Das ausgekoppelte Licht 30 kann beispielsweise zur Erzeugung einer Schlusslichtfunktion dienen. Beispielsweise können als Auskoppelmittel auf der rückseitigen Flachseite 5 des zweiten Abschnitts 20 des ersten Lichtleiters 4 langgestreckte Prismenelemente oder Streuelemente angeordnet sein. Alternativ können auch an der vorderseitigen Flachseite 5' entsprechende Auskoppelmittel angeordnet sein.

Zusätzlich oder alternativ können in dem zweiten Abschnitt 20 des ersten Lichtleiters 4 Auskoppelmittel derart angeordnet sein, dass Licht 31 in Hauptabstrahlrichtung H entsprechend einer vorgegebenen Beschriftung oder eines Logos 22 an der vorderen Flachseite 5' austritt.

Wenn das in Hauptabstrahlrichtung H von dem zweiten Abschnitt 20 des ersten Lichtleiters 4 abgestrahltes Lichtbündel die Lichtunktion (Schlusslichtfunktion) und die Logofunktion aufweisen soll, können die Lichtfunktion bewirkenden ersten Auskoppelmittel zu einer anderen Leuchtdichte des ausgekoppelten Lichtes führen als die für das Logo 22 verantwortlichen zweiten Auskoppelmittel. Im vorliegenden Ausführungsbeispiel sind die ersten Auskoppelmittel über die gesamte Fläche des zweiten Abschnitts 20 angeordnet, während die zweiten Auskoppelmittel zur Darstellung des Logos 22 lediglich bereichsweise nur in einem Teil des zweiten Abschnitts 20 des ersten Lichtleiter angeordnet sind, in dem sich das Logo 22 befinden soll.

Zur Halterung des U-förmigen Lichtleitelementes 21 sind auf einer den Lichtquellen 3, 8 zugewandten Seite Haltearme 23 als Verlängerung an einer zu der Lichteinkoppelfläche verlaufenden Schmalseite des ersten Abschnitts des Lichtleiters 4 und des zweiten Lichtleiters 9 angeordnet. Endseitig weisen die Haltearme 23 Befestigungslaschen 24 auf zur Befestigung des U-förmigen Lichtleitelementes 21 an einem nicht dargestellten Gehäuse der Beleuchtungsvorrichtung.

Der Verlängerungsabschnitt 14 des ersten Lichtleiters 4 weist auf einer dem Kreuzungsbereich 13 abgewandten Seite die linienförmige Lichtauskoppelfläche 6" auf, die zur Erzeugung eines Seitenmarkierungslichtes 26 genutzt werden kann. Das Seitenmarkierungslicht 26 wird somit im Wesentlichen senkrecht zu dem Schlusslicht 30 oder dem Umrisslicht 28 und zu der Logobeleuchtung 31 abgestrahlt.

Die auf einer dem Kreuzungsbereich 13 abgewandten Seite angeordnete linienförmige Lichtauskoppelfläche 11" des Verlängerungsabschnitts 15 des zweiten Lichtleiters 9 kann zur Erzeugung einer Umrisslichtfunktion 28 dienen. Dieses Licht der Umrissleuchte wird in die gleiche Richtung (Hauptabstrahlrichtung H) abgestrahlt wie das Schlusslicht 30.

Vorteilhaft können durch die Erfindung kompakt mehrere Lichtfunktionen platzsparend erzeugt werden.

Die Lichtquellen 3, 8 sind vorzugsweise als LED-Lichtquellen ausgebildet, die jeweils auf einer nicht dargestellten Leiterplatte angeordnet sind. Die Lichtquellen 3, 8 sind in einer Reihe angeordnet.

### Bezugszeichenliste

- 1: 1. Lichteinheit
- 2: 2. Lichteinheit
- 3: Lichtquellen
- 4: 1. Lichtleiter
- 5,5': Flachseiten
- 6: Schmalseiten
- 6': Lichteinkoppelfläche
- 6": Lichtauskoppelfläche
- 7: 1. Licht
- 8: Lichtquellen
- 9: 2. Lichtleiter
- 10,10': Flachseiten
- 11: Schmalseiten
- 11': Lichteinkoppelfläche
- 11": Lichtauskoppelfläche
- 12: 2. Licht
- 13: Kreuzungsbereich
- 14: Verlängerungsabschnitt
- 15: Verlängerungsabschnitt
- 16: 1. Abschnitt
- 17: Streuoptikelemente
- 18: 1. Abschnitt
- 19: Umlenkabschnitt
- 20: 2. Abschnitt
- 21: U-förmiges Lichtleitelement
- 22: Logo
- 23: Haltearm
- 24: Befestigungslaschen
- 25: Lichtauskoppelfläche
- 26: Seitenmarkierungslicht
- 27: Lichtauskoppelfläche
- 28: Umrisslichtfunktion
- 29: Schrägfläche
- 30: Schlusslicht
- 31: Logolichtfunktion
- H: Hauptabstrahlrichtung
- E_{K}: Erstreckungsachse
- φ: Winkel
- I₁,I₂: Länge
- I_{V1},I_{V2}: Länge
- d₁,d₂: Dicke

## Patentansprüche

1. Beleuchtungsvorrichtung für Fahrzeuge mit einer ersten Lichteinheit (1) enthaltend eine Lichtquelle (3) und einen ersten flächigen Lichtleiter (4), der eine linienförmige Lichteinkoppelfläche (6') und eine linienförmige Lichtauskoppelfläche (6") aufweist, und mit einer zweiten Lichteinheit (2) enthaltend eine Lichtquelle (8) und einen zweiten flächigen Lichtleiter (9), der eine linienförmige Lichteinkoppelfläche (11') und eine linienförmige Lichtauskoppelfläche (11") aufweist,
- wobei der erste flächige Lichtleiter (4) und der zweite flächige Lichtleiter (9) einstückig miteinander verbunden sind zur Bildung eines Lichtleitelementes,
- wobei jeweils gegenüberliegende Flachseiten (5, 5') des ersten Lichtleiters (4) und gegenüberliegende Flachseiten (10, 10') des zweiten Lichtleiters (9) sich in einem Kreuzungsbereich (13) kreuzen und
- wobei der erste flächige Lichtleiter (4) einen Umlenkungsabschnitt (19) zwischen einem ersten ebenen Abschnitt (18) und einem zweiten ebenen Abschnitt (20) des ersten flächigen Lichtleiters (4) aufweist,
wobei der erste flächige Lichtleiter (4) und der zweite flächige Lichtleiter (9) in einem quer zu der linienförmigen Lichteinkoppelfläche (6', 11') des ersten Lichtleiters (4) und des zweiten Lichtleiters (9) verlaufenden Querebene ein U-förmiges Lichtleitelement (21) bilden, wobei von dem Kreuzungsbereich (13) in einem Winkel (φ) ein Verlängerungsabschnitt (14) des ersten Lichtleiters (4) und ein Verlängerungsabschnitt (15) des zweiten Lichtleiters (9) abragen, **dadurch gekennzeichnet, dass** der zweite ebene Abschnitt (20) des ersten Lichtleiters (4) einen Scheitel des U-förmigen Lichtleitelementes (21), der erste ebene Abschnitt (18) des ersten Lichtleiters (4) einen ersten Schenkel und ein erster Abschnitt (16) des zweiten Lichtleiters (9) einen zweiten Schenkel des U-förmigen Lichtleitelementes (21) bilden, dass der erste flächige Lichteiter (4) in dem zweiten ebenen Abschnitt (20) desselben Auskoppelmittel aufweist, derart, dass eingekoppeltes Licht (7) an einem in Hauptabstrahlrichtung (H) vorderen Flachseite (5') des zweiten ebenen Abschnitts (20) ausgekoppelt wird zur Erzeugung einer vorgegebenen Lichtfunktion, dass auf einer zu dem Kreuzungsbereich (13) abgewandten Seite der Verlängerungsabschnitte (14, 15) eine Schmalseite als eine linienförmige Lichtauskoppelfläche (6") des ersten Lichtleiters (4) und als eine linienförmige Lichtauskoppelfläche (11") des zweiten Lichtleiters (9) ausgebildet ist, wobei die Lichtauskopplung an der linienförmigen Lichtauskoppelfläche (6") des ersten Lichtleiters (4) und der linienförmigen Lichtauskoppelfläche (11") des zweiten Lichtleiters (9) jeweils in Richtung einer Lichtführung des ersten Lichtleiters (4) bzw. des zweiten Lichtleiters (9) erfolgt.

2. Beleuchtungsvorrichtung nach Anspruch 1, **dadurch gekennzeichnet, dass** die Verlängerungsabschnitte (14, 15) zueinander einen gleichen Winkel (φ) einschließen wie in Lichtstromrichtung auf den Kreuzungsbereich (13) laufende zweite ebene Abschnitte (20) des ersten Lichtleiters (4) und der erste Abschnitt (16) des zweiten Lichtleiters (9).

3. Beleuchtungsvorrichtung nach Anspruch 2, **dadurch gekennzeichnet, dass** der eingeschlossene Winkel (φ) zwischen den Verlängerungsabschnitten (14, 15) 90° beträgt.

4. Beleuchtungsvorrichtung nach einem der Ansprüche 1 bis 3, **dadurch gekennzeichnet, dass** eine Erstreckungsachse (E_{K}) des Kreuzungsbereichs (13) parallel zu einer Erstreckungsrichtung der linienförmigen Lichteinkoppelfläche (6', 11') des ersten Lichtleiters (4) und des zweiten Lichtleiters (9) verläuft.

5. Beleuchtungsvorrichtung nach Anspruch 4, **dadurch gekennzeichnet, dass** die Erstreckungsachse (E_{K}) des Kreuzungsbereichs (13) in vertikaler Richtung verläuft.

6. Beleuchtungsvorrichtung nach einem der Ansprüche 1 bis 5, **dadurch gekennzeichnet, dass** die Auskoppelmittel derart verteilt in dem zweiten Abschnitt (20) des ersten Lichtleiters (4) angeordnet sind, dass Licht vollflächig von dem zweiten ebenen Abschnitt (20) des ersten Lichtleiters (4) in Hauptabstrahlrichtung (H) ausgekoppelt wird zur Erzeugung der Lichtfunktion.

7. Beleuchtungsvorrichtung nach einem der Ansprüche 1 bis 6, **dadurch gekennzeichnet, dass** in dem zweiten ebenen Abschnitt (20) des ersten flächigen Lichtleiters (4) lediglich bereichsweise zweite Auskoppelmittel derart angeordnet sind, dass Licht (31) an der vorderen Flachseite (5') des ersten Lichtleiters (4) zur Darstellung einer Beschriftung oder Logos (22) ausgekoppelt wird.

8. Beleuchtungsvorrichtung nach einem der Ansprüche 1 bis 7, **dadurch gekennzeichnet, dass** der Umlenkabschnitt (19) des ersten Lichtleiters (4) eine Schrägfläche (29) aufweist, an der das eingekoppelte Licht (7) umgelenkt wird.

9. Beleuchtungsvorrichtung nach einem der Ansprüche 1 bis 8, **dadurch gekennzeichnet, dass** die Schrägfläche (29) eben oder mit Reflexionsoptikelementen versehen und in einem Winkel in einem Bereich von 40° bis 50°, vorzugsweise in einem Winkel von 45°, zu einer Erstreckungsrichtung des ersten Abschnitts (18) und des zweiten Abschnitts (20) des ersten Lichtleiters (4) verläuft.

10. Beleuchtungsvorrichtung nach einem der Ansprüche 1 bis 9, **dadurch gekennzeichnet, dass** an der linienförmigen Lichteinkoppelfläche (6') des ersten Lichtleiters (4) und an der linienförmigen Lichteinkoppelfläche (11') des zweiten Lichtleiters (9) jeweils eine Reihe von Lichtquellen (3, 8) angeordnet ist.

11. Beleuchtungsvorrichtung nach einem der Ansprüche 1 bis 10, **dadurch gekennzeichnet, dass** in Verlängerung einer mit der Lichteinkoppelfläche (6', 11') verbundenen Schmalseite des ersten Lichtleiters (4) und des zweiten Lichtleiters (9) jeweils ein Haltearm (23) angeformt ist zur Befestigung des U-förmigen Lichtleitelementes (21) an einem Gehäuse der Beleuchtungsvorrichtung.

12. Beleuchtungsvorrichtung nach einem der Ansprüche 1 bis 11, **dadurch gekennzeichnet, dass** der zweite ebene Abschnitt (20) des ersten Lichtleiters (4) im Wesentlichen senkrecht zu dem ersten Abschnitt (18) des ersten Lichtleiters (4) und senkrecht zu dem zweiten Lichtleiter (9) verläuft.

## Claims

1. A lighting device for motor vehicles with a first light unit (1) containing a light source (3) and a first flat light guide (4) having a first linear light coupling surface (6') and a linear light decoupling surface (6"), and with a second light unit (2) containing a light source (8) and a second flat light guide (9) having a linear light coupling surface (11') and a linear light decoupling surface (11"),
- wherein the first flat light guide (4) and the second flat light guide (9) are connected integrally to each other to form a light guide element,
- wherein opposite flat sides (5, 5') of the first light guide (4) and opposite flat sides (10, 10') of the second light guide (9) intersect in an intersection area (13), and
- wherein the first flat light guide (4) has a deflection section (19) between a first flat section (18) and a second flat section (20) of the first flat light guide (4),
wherein
the first flat light guide (4) and the second flat light guide (9) form a U-shaped light guide element (21) in a transverse plane extending in a transverse plane to the linear light-coupling surface (6', 11') of the first light guide (4) and of the second light guide (9), wherein an extension section (14) of the first light guide (4) and an extension section (15) of the second light guide (9) project from the intersection area (13) at an angle (φ),
**characterised in that** the second flat section (20) of the first light guide (4) forms a vertex of the U-shaped light guide element (21), the first flat section (18) of the first light guide (4) forms a first leg and a first section (16) of the second light guide (9) forms a second leg of the U-shaped light guide element (21), that the first planar light guide (4) has decoupling means in the second flat section (20) thereof such that coupled-in light (7) is decoupled at a front flat side (5') of the second flat section (20) in the main radiation direction (H) in order to generate a predetermined light function, that on a side of the extension sections (14, 15) facing away from the intersection area (13) a narrow side is formed as a linear light decoupling surface (6") of the first light guide (4) and as a linear light decoupling surface (11") of the second light guide (9), whereby the light is decoupled at the linear light decoupling surface (6") of the first light guide (4) and at the linear light decoupling surface (11") of the second light guide (9), in each case in the direction of the light guidance of the first light guide (4) and of the second light guide (9) respectively.

2. A lighting device according to Claim 1,
**characterised in that**
the extension sections (14, 15) enclose an equal angle (φ) with each other as the second flat sections (20) of the first light guide (4) and the first section (16) of the second light guide (9) running in the light flux direction towards the intersection area (13).

3. A lighting device according to Claim 2,
**characterised in that**
the enclosed angle (φ) between the extension sections (14, 15) is 90°.

4. A lighting device according to one of Claims 1 to 3,
**characterised in that**
an extension axis (EK) of the intersection area (13) runs parallel to an extension direction of the linear light coupling surface (6', 11') of the first light guide (4) and of the second light guide (9).

5. A lighting device according to Claim 4,
**characterised in that**
the extension axis (EK) of the intersection area (13) runs in vertical direction.

6. A lighting device according to one of Claims 1 to 5,
**characterised in that**
the decoupling means are distributed in the second section (20) of the first light guide (4) in such a way that light is decoupled over the entire surface of the second flat section (20) of the first light guide (4) in the main radiation direction (H) to generate the light function.

7. A lighting device according to one of Claims 1 to 6,
**characterised in that**
in the second flat section (20) of the first flat light guide (4), second decoupling means are arranged only in certain areas in such a way that light (31) is decoupled at the front flat side (5') of the first light guide (4) to display lettering or a logo (22).

8. A lighting device according to one of Claims 1 to 7,
**characterised in that**
the deflection section (19) of the first light guide (4) has an inclined surface (29) at which the light coupled in (7) is deflected.

9. A lighting device according to one of Claims 1 to 8,
**characterised in that**
the inclined surface (29) is flat or has reflective optical elements and extends at an angle in a range from 40° to 50°, preferably at an angle of 45°, to a direction of extension of the first section (18) and the second section (20) of the first light guide (4).

10. A lighting device according to one of Claims 1 to 9,
**characterised in that**
a row of light sources (3, 8) is arranged on the linear light coupling surface (6') of the first light guide (4) and on the linear light coupling surface (11') of the second light guide (9).

11. A lighting device according to one of Claims 1 to 10,
**characterised in that**
a retaining arm (23) is formed in the extension of a narrow side of both the first light guide (4) and the second light guide (9) connected to the light coupling surface (6', 11') for attaching the U-shaped light guide element (21) to a housing of the lighting device.

12. A lighting device according to one of Claims 1 to 11,
**characterised in that**
the second flat section (20) of the first light guide (4) runs essentially perpendicularly to the first section (18) of the first light guide (4) and perpendicularly to the second light guide (9).

## Revendications

1. Dispositif d'éclairage pour véhicules comprenant une première unité lumineuse (1) contenant une source de lumière (3) et un premier guide de lumière à plat (4) comportant une surface linéaire de couplage lumineux (6') et une surface linéaire de découplage lumineux (6") et une deuxième unité lumineuse (2) contenant une source de lumière (8) et un deuxième guide de lumière à plat (9) comportant une surface linéaire de couplage lumineux (11') et une surface linéaire de découplage lumineux (11"),
- le premier guide de lumière à plat (4) et le deuxième guide de lumière à plat (9) étant reliés entre eux d'un seul tenant pour former un élément conducteur de lumière,
- les côtés plats opposés (5, 5') du premier guide de lumière (4) et les côtés plats opposés (10, 10') du deuxième guide de lumière (9) se croisant dans une zone d'intersection (13)
et
- le premier guide de lumière à plat (4) comportant une section de déviation (19) entre une première section plane (18) et une deuxième section plane (20) du premier guide de lumière à plat (4),
où
le premier guide de lumière à plat (4) et le deuxième guide de lumière à plat (9) forment un élément conducteur de lumière en forme de U (21) dans un plan transversal à la surface linéaire de couplage lumineux (6', 11') du premier guide de lumière (4) et du deuxième guide de lumière (9), une section de prolongement (14) du premier guide de lumière (4) et une section de prolongement (15) du deuxième guide de lumière (9) dépassant de la zone d'intersection (13) selon un angle (φ),
**caractérisé en ce que** la deuxième section plane (20) du premier guide de lumière (4) forme un sommet de l'élément conducteur de lumière en forme de U (21), la première section plane (18) du premier guide de lumière (4) forme une première branche et une première section (16) du deuxième guide de lumière (9) une deuxième branche de l'élément conducteur de lumière en forme de U (21), **en ce que** le premier guide de lumière à plat (4) comporte, dans la deuxième section plane (20) les mêmes moyens de découplage de manière à ce que la lumière couplée (7) est découplée sur un côté plat (5') de la deuxième section plane (20) situé à l'avant dans la direction d'émission principale (H) afin de générer une fonction lumineuse prédéfinie, de telle sorte que sur l'un côté des sections de prolongement (14, 15) opposé à la zone d'intersection (13), est formé un côté étroit en tant que surface de découplage lumineux linéaire (6") du premier guide de lumière (4) et une surface de découplage lumineux linéaire (11") du deuxième guide de lumière (9), le découplage lumineux au niveau de la surface de découplage lumineux linéaire (6") du premier guide de lumière (4) et la surface de couplage lumineux linéaire (11") du deuxième guide de lumière (9) s'effectue respectivement dans le sens d'un guidage de lumière du premier guide de lumière (4) et du deuxième guide de lumière (9).

2. Dispositif d'éclairage selon la revendication 1
**caractérisé en ce que**
les sections de prolongement (14, 15) forment entre elles un angle égal (φ) identique à celui formé par les secondes sections planes (20) du premier guide de lumière (4) et la première section (16) du second guide de lumière (9) qui s'étendent dans la direction du flux lumineux vers la zone d'intersection (13).

3. Dispositif d'éclairage selon la revendication 2
**caractérisé en ce que**
l'angle (φ)formé entre les parties prolongées (14, 15) est de 90°.

4. Dispositif d'éclairage selon l'une des revendications 1 à 3
**caractérisé en ce que**
un axe d'extension (EK) de la zone d'intersection (13) s'étend parallèlement à une direction d'extension de la surface de couplage lumineux linéaire (6', 11') du premier guide de lumière (4) et du deuxième guide de lumière (9).

5. Dispositif d'éclairage selon la revendication 4
**caractérisé en ce que**
l'axe d'extension (EK) de la zone d'intersection (13) s'étend dans le sens vertical.

6. Dispositif d'éclairage selon l'une des revendications 1 à 5
**caractérisé en ce que**
les moyens de découplage sont disposés de telle manière dans la deuxième section (20) du premier guide de lumière (4) que la lumière est découplée sur toute la surface de la deuxième section plane (20) du premier guide de lumière (4) dans la direction d'émission principale (H) afin de générer la fonction d'éclairage.

7. Dispositif d'éclairage selon l'une des revendications 1 à 6
**caractérisé en ce que**
dans la deuxième section plane (20) du premier guide de lumière à plat (4), seuls des deuxièmes moyens de découplage sont disposés par zone de manière à ce que la lumière (31) soit découplée au niveau de la face avant plate (5') du premier guide de lumière (4) pour afficher une inscription ou un logo (22).

8. Dispositif d'éclairage selon l'une des revendications 1 à 7
**caractérisé en ce que**
la section de déviation (19) du premier guide de lumière (4) présente une surface inclinée (29) sur laquelle la lumière couplée (7) est déviée.

9. Dispositif d'éclairage selon l'une des revendications 1 à 8
**caractérisé en ce que**
la surface inclinée (29) est plane ou pourvue d'éléments optiques réfléchissants et s'étend selon un angle compris entre 40° et 50°, de préférence selon un angle de 45°, par rapport à une direction d'extension de la première partie (18) et de la deuxième partie (20) du premier guide de lumière (4).

10. Dispositif d'éclairage selon l'une des revendications 1 à 9
**caractérisé en ce que**
une série de sources de lumière (3, 8) est disposée respectivement sur la surface linéaire de couplage lumineux (6') du premier guide de lumière (4) et sur la surface linéaire de couplage lumineux (11') du deuxième guide de lumière (9).

11. Dispositif d'éclairage selon l'une des revendications 1 à 10
**caractérisé en ce que**
un bras de retenue (23) est formé dans le prolongement d'un côté étroit du premier guide de lumière (4) et du deuxième guide de lumière (9) relié à la surface de couplage lumineux (6', 11') afin de fixer l'élément conducteur de lumière en forme de U (21) à un boîtier du dispositif d'éclairage.

12. Dispositif d'éclairage selon l'une des revendications 1 à 11
**caractérisé en ce que**
la deuxième section plane (20) du premier guide de lumière (4) s'étend essentiellement perpendiculairement à la première section (18) du premier guide de lumière (4) et perpendiculairement au deuxième guide de lumière (9).
